# EUROPEAN PATENT SPECIFICATION

(11) **EP 2 812 886 B1**
(45) Date of publication and mention of the grant of the patent: **29.06.2016**
(21) Application number: 13705593.5
(22) Date of filing: 16.01.2013
(51) Int. Cl.: G07C 9/00, B60W 30/00, G06Q 40/08

(54) **A DEVICE FOR THE CHECK OF THE VALIDITY OF THE INSURANCE COVERAGE OF A MEANS OF TRANSPORT AND FOR THE COMMAND OF ITS IGNITION**
VORRICHTUNG ZUM VERIFIZIEREN DER GÜLTIGKEIT DES VERSICHERUNGSSCHUTZES VON EINEM TRANSPORTMITTEL UND ZUM UNTERBINDEN DES ANLASSENS
APPAREIL POUR VÉRIFIER LA VALIDITÉ DE LA COUVERTURE DE L'ASSURANCE D'UN MOYEN DE TRANSPORT ET POUR LA COMMANDE DE SON DÉMARRAGE.

(30) Priority: 18.01.2012 IT PI20120006
(43) Date of publication of application: 17.12.2014
(73) Proprietor: Spadoni, Roberto, 56040 Cenaia - Loc. Crespina (PI) (IT)
(72) Inventor: Spadoni, Roberto, 56040 Cenaia - Loc. Crespina (PI) (IT)
(74) Representative: Emmi, Mario
(86) International application number: PCT/IB2013/050386
(87) International publication number: WO 2013/108183

(56) References cited:
- EP-A1- 1 415 873
- EP-A1- 1 728 945
- EP-A2- 1 495 927
- US-A1- 2006 278 700
- US-A1- 2007 046 425
- US-A1- 2010 066 513

## Description

### Technical field

The present invention concerns the technical field relative to command devices for handling the start-up of a wheeled motorized means of transport, for example an automobile, a scooter, a bus and similar ones.

In particular, the invention refers to an innovative device capable of verifying the validity of the insurance coverage and therefore of allowing both the start-up and also the subsequent motion of the vehicle only in case of valid insurance coverage.

### Background art

As it is well known, all wheeled motorized means of transport, from motorcycles to trucks and buses, are obliged to have an adequate insurance coverage to circulate. Unfortunately, road accidents are always more frequent and, many times, they can also assume serious connotations. A correct insurance coverage, by law, is therefore mandatory and essential to guarantee that the person that has suffered the accident and has no guilt gets compensation for damages. A missing insurance coverage implies, therefore, the impossibility to give compensation for damages to the person who has suffered the accident. It is clear that these situations can assume also very serious connotations, above all in the case in which the accident causes permanent traumas and disabilities. In these cases, it is therefore necessary to start a long legal proceeding which, anyway, risks to take long to arrive at a conclusion and the results of the collection are negative many times.

In the current state of the art, the check of the insurance coverage is entrusted to the civil awareness of the holder of the means of transport who, before the expiration of the insurance coverage, has the obligation of renewing it and showing the specific coupon. Although there is the risk of getting serious fines and despite the checks made by the security forces, there are always means of transport that circulate freely in the streets without insurance coverage.

A first solution to such a technical problem is indicated in document US2007/0046425 in which a device is described which, through a memory card, reads some data of the user and verifies if there are any irregularities. Contextually, a connection through the radio is made to a police central station and/or to an insurance centre for more thorough controls and to give the consent for the ignition provided that the insurance coverage results in good order as well as the driving license. In the case of any irregularity, the start-up of the vehicle is denied.

It is clear that such a solution is not very practical since it requires a connection through the radio to one or more external centres. Such a solution is therefore structurally complex and not very functional since the ignition of the vehicle is linked to a response time from said centres. Moreover, if the connection via radio is accidentally interrupted, then the check results scarcely efficient.

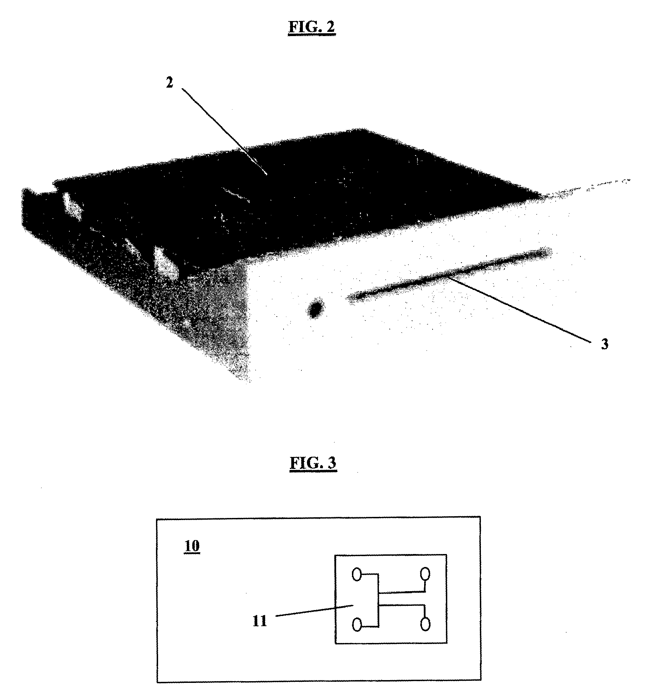

To solve this problem, patent application EP1415873 proposes a further solution. It foresees an alert apparatus which, through a wireless communication, reads the personal data present in an electronic driving license. Inside said apparatus there are a first and a second evaluation units suitable for verifying the validity of the driving license and the compatibility of the driver with the insurance data. The insurance data are loaded on a specific memory unit which can be internal or external to the apparatus. In an embodiment indicated in figure 3, the memory unit 323, which contains the insurance data, is for example detachable from the apparatus. An internal clock calculates date and time and the evaluation units elaborate, through a comparison with the data coming from the time unit, the validity of the insurance coverage. The system therefore allows to verify if the driver is in order from the point of view of the insurance and the norms to be able to guide through the extrapolation of the data from the electronic driving license and of the insurance data memorized. In the case that one or more of the data verified are not compliant (for example the insurance coverage has expired) the denial of the start of the means of transport is foreseen.

This solution is certainly more functional with respect to the American background art described, since it does not require any communication via radio to external centres. The consent for the ignition of the vehicle depends on the outcome of the check of the data loaded on said memory cards, external and/or internal to the apparatus itself.

Nevertheless, document EP1415873 limits itself to deny the start-up of the means and above all does not verify the geographical position of the means. The insurance data are controlled at the moment of the start-up and it is not possible to make the block of the means of transport following the consent for the ignition if, for example, during the use of the means of transport, it enters in a geographical area that is not covered by the insurance coverage or if it exceeds a certain time limit in which, effectively, the limit of validity of the insurance coverage is exceeded.

It is clear that in this case the unforeseen event of an accident would not be covered by the insurance, with possible serious consequences.

### Disclosure of invention

It is therefore the aim of the present invention to provide an innovative device for the command of the start-up of a motorized means of transport that solves at least in part said technical inconveniences.

It is the aim of the present invention to provide an innovative device that is capable of controlling the validity of an insurance coverage, allowing to put in motion the means of transport only in a condition of regularity.

In particular, it is the aim of the present invention of provide an innovative device that is capable not only of denying the start-up of the means of transport in case of invalid insurance coverage, but also, and above all, of monitoring in continuous the insurance coverage validity also following the consent of put in motion and therefore during the start of the vehicle.

These and other aims are therefore reached with the present device for the control of the start-up of a motorized means of transport in accordance with claim 1.

The device (1) that is the object of the invention comprises:
- An electronic assembly (2, 4, 5);
- An external device (10) on which to electronically memorize one or more indicative data of the validity of the insurance coverage of the user, said external device being connectable in communication with the electronic assembly (2, 4, 5) for the transfer of the insurance data contained in it;
- The electronic assembly (2, 4, 5) comprises a processor (2) to electronically read and process the data contained in the external device (10), and a time device (5) placed in communication with the processor (2) and capable of reading a current date and/or a geographical position in such a way as to command the block of the ignition of the means of transport in case of verification of an expired insurance coverage or anyway invalid.

In accordance with the invention, the processor (2) is further programmed to make, following the consent for the start-up of the engine, a comparison in continuous cycle between the insurance data extrapolated and the current date and/or geographical position coming from the time device (5) and updated in continuous cycle, the processor (2) sending a block signal of the engine in case of invalidity of the insurance coverage. The device (1) foresees a Transceiver CAN (6) placed in communication with the processor (2) and configured to operate said block of the engine not just in the start-up phase but also during the start of the vehicle in correspondence of the reception of said block signal.

In accordance with this solution all said technical problems are solved easily.

In the first place, the put in motion of the means of transport in question is denied in case of missing insurance coverage. The circulation of means of transport lacking adequate coverage is therefore denied. In order to be able to re-activate the put in motion of the means of transport it will be necessary to proceed with the payment of the insurance coverage and thus update one's own external device of memorization of the insurance data (10).

In addition, the control at continuous cycle and the combined use of a Transceiver can 6 allows to turn off the engine or block it also following the consent for the start-up.

Further advantages can de deduced from the dependent claims.

### Brief description of drawings

Further characteristics and advantages of the present device, according to the invention, will result clearer with the description that follows of some preferred embodiments, made to illustrate but not to limit, with reference to the annexed drawings, wherein:
* Figure 1 shows a block scheme of the device in accordance with the present invention;
* Figure 2 shows an axonometric view of the device in accordance with the invention;
* Figure 3 schematizes a possible example of device of electronic memorization of insurance data in the shape of a smart card 10.

### Description of some preferred embodiments

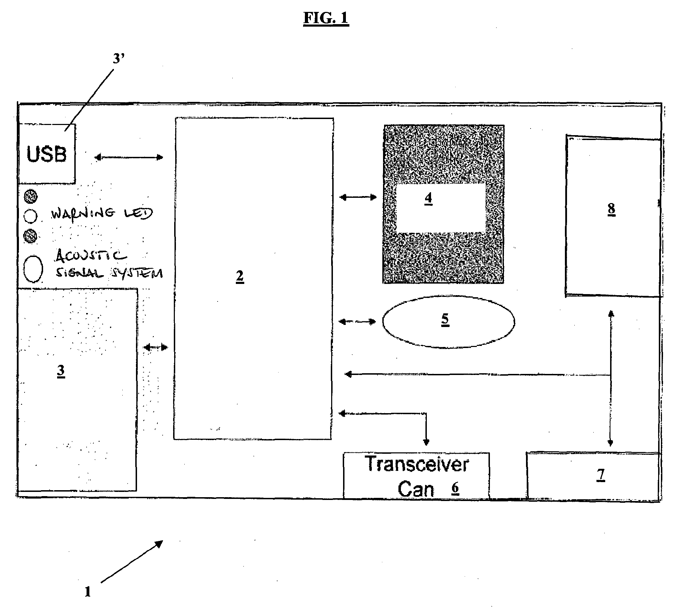

Figure 1 describes, in accordance with a block scheme, a device 1 for the control of the start-up of a motorized means of transport in accordance with the invention.

The device can be installed on any means of transport, such as an automobile, a bus or any wheeled motorized means circulating on road.

The device 1 foresees a processor 2, for example a 32-bit microprocessor of the Renesas H8SX type. The processor, as better clarified below, foresees a specific software programming that allows to handle the verification of the validity of insurance coverage, as better clarified below.

With number 3 a holding seat has been indicated, into which to insert an electronic memorization device of the insurance data 10 in the shape of a smart card 10, for example.

Figure 2 shows the constructive realization of what has been schematized in figure 1 and highlights the microprocessor and the access seat 3 for the smart card (apart from the LED of indication of the functioning status placed near the seat 3).

Going back to figure 1, as shown by the direction of the double arrow, once the insertion of the smart card 10 takes place there will be an electronic communication with the processor 2 so that an exchange of information can take place and in particular, the processor 2 can read the data memorized electronically in the smart card. In particular, the communication is such that the processor is capable of extrapolating the data contained in the smart card 10.

The smart card 10 is schematically represented in figure 3 and, as it is well known in the state of the art, it also comprises an electronic chip 11 into which the necessary insurance data can be loaded electronically. The smart card is well known in the state of the art and for this reason it will not be further described in detail below.

Going on with the structural description of the invention, the device 1 comprises an EPROM 4 card (Erasable Programmable Read Only Memory) which is in communication with the processor 2. The EPROM card is, as it is well known in the state of the art, an only reading integrative memory. In this memory card the data of the insurance coverage detected by the smart card 10 are saved and are kept. In this way, for example in the absence of the smart card, it will be anyway possible to proceed with the start of the means of transport through, for example, an ordinary keyboard since the insurance coverage data are anyway saved internally in the device.

The device foresees a time device 5 that can be, for example, in the shape of an internal clock 5, in the shape of a GPS system 5 or a combination of both. The time device 5 is therefore capable of detecting a current date (intending by current date a time, a date and a year) and/or a geographical position. The GPS system, for example, is capable of giving time, date and position.

It is then foreseen a Transceiver CAN device 6 in communication with the engine to block the start-up in case of verification of an expired insurance coverage. A transceiver CAN is therefore a system of communication between components and specific for automobiles; it is capable of sending pre-determined commands following an input received by it.

Always as shown in the block scheme of figure 1, the device 1 can foresee a primary feeding 7, for example constituted by the battery itself of the vehicle. For obvious safety reasons, for example when it is necessary to make the detachment of the battery or prevent the breakage of the battery itself, it is then foreseen a secondary feeding 8 that, for example, can be activated in correspondence of the de-activation of the primary feeding.

A LED lighting and an acoustic signal can be integrated in order to indicate visibly and/or with a sound notice the status detected of the insurance coverage.

As better clarified below, it is also foreseen an input 3' for USB key, well known in the state of the art.

In use, therefore, the holder of the vehicle is obliged, in order to make the ignition, to insert his own smart card inside the seat 3 so that the processor 2 can read the data loaded in it.

The data of the smart card can be of different nature in order to be able to evaluate, through a specific software foreseen in the processor, the verification of the validity of the insurance coverage.

The insurance company itself will be able to foresee, in each case, the electronic loading of the validity data of the insurance in the smart card of the user every time he will make regularize the economic situation of the insurance.

For example, in a first possible embodiment of the invention, the loading of the expiry date of the insurance coverage can be foreseen.

Once the smart card is inserted in its own seat 3, the processor 2 reads the data contained in it and therefore reads the expiry date of the insurance coverage.

At this point, the processor receives from the GPS 5 or from the clock 5 the current date and makes a control with the date memorized in the smart card. It is in fact known that a GPS is able to identify position and time through a satellite connection, and, for this reason, it will not be further described in detail here.

In the case the expiry date of the insurance coverage (hour/day/month/year) detected by the processor 2 through the reading of the smart card is subsequent to the current date detected by the processor through the GPS 5 or the internal clock (hour/day/month/year), then the insurance coverage will still be valid and the processor will authorize the start of the means of transport. In that sense, the processor 2 commands the transceiver can 6 to allow the ignition of the automobile.

The transceiver can 6 can act on various devices of the means of transport to allow or block the ignition exactly as in the ordinary antitheft devices that are well known in the state of the art. For example, the supply of fuel to the engine through the closing of specific valves can be blocked, or the electric feeding necessary to produce the ignition of the vehicle can be interrupted.

The data read and processed by the processor 2 are then memorized at each reading on the EPROM type card 4 in such a way that these data are not lost but are kept permanently and updated at each subsequent reading. In case of failure of the smart card the reading of the data directly from the EPROM card can be commanded and activated (in this case, for example, the expiry date of the insurance coverage) by means of a specific keyboard.

An acoustic signal and/or the LED light will be able to warn about an operating state. For example, the green light indicates that the ignition is about to happen regularly. A red light indicates that the insurance coverage has expired. A yellow light can be selected to indicate that the insurance coverage is about to expire. For example, the software of the processor can without problems be programmed in such a way that in proximity of the deadline, for example 15 days before the expiry of the insurance coverage, the start-up is allowed warning about said deadline through a specific yellow lighting and/or an acoustic signal.

The preferred embodiment of the invention foresees, as described, an inlet 3' for a USB key.

This, as shown in the diagram of figure 1, can be presented as an alternative for the electronic reading of the validity data of an insurance (for example, through a control of the expiry date). In that case, the external data memorization device, instead of presenting itself in the form of a smart card, will have the form of a USB key.

In this case, the electronic information will be loaded in the key and will be read by the processor at the moment of its insertion in the seat 3'.

This solution can prevent the inconvenience of losing the specific smart card.

To avoid counterfeiting, both the smart card and the data contained in the key can be provided with an identification code released by the insurance company and that the processor reads and verifies before starting to make the control of the data. A 256-bit card cryptography could also be foreseen.

Although a receiving seat where to insert the smart card has been described, a communication between the smart card and the processor of the wireless type or of the scanning type could also be foreseen.

The Transceiver CAN 6 is very important because it allows a control of the engine in continuous and therefore in "real time". The transceiver CAN 6, as indicated in figure 1, communicates with the processor 2 and therefore receives the information elaborated by it, apart from being in communication with the engine. If the Transceiver CAN receives a piece of information from the processor 2 that indicates an irregularity on the insurance coverage, then, as already said, it commands a block of the engine not just in the start-up phase but also following the start-up itself.

The control of the insurance data through a comparison in the processor 2 between what has been loaded by the user and the time device 5 takes place in continuous. In continuous the processor receives updated data (therefore in continuous cycle) of hour, date, year and eventually position. In this way, in continuous cycle, a control of the insurance validity is made not just at the ignition but also during the start. This gives certainty of the fact that it is possible to block the means of transport, through precisely the Transceiver Can 6, at any moment also once the vehicle has been started.

A control in continuous means a control, for example, at pre-determined intervals of time following the put in motion of the means of transport or continuously, always after the put in motion of the means of transport. A first application example can be the following: The vehicle is started a few hours before the expiry of the insurance coverage. Formally, the internal programming of the processor authorizes the start-up of the vehicle since at start-up the comparison between the data coming from the time device 5 and those extrapolated from the smart card give a positive result. Nevertheless, the user could continue to use the vehicle beyond the time limit of the coverage. A control in continuous allows the processor 2 to receive in real time the information relative to the geographical location and/or date-hour to compare it in continuous with the insurance data extrapolated in such a way that the transceiver CAN 6 can operate the stop of the engine following a block signal received by the processor.

In a second example, it could happen that the insurance validity is in order in temporal terms but not in territorial terms; which means that the user could go to countries where the insurance coverage is not valid. In this case, the use of an time device 5 in the form of a satellite GPS solves the problem since it also provides a geographical position. In this case, considering what has been described before, the transceiver can also operate a block of the vehicle during use if it goes beyond a territorial limit where the insurance coverage is not active.

## Claims

1. A device (1) for the command of the start-up of a motorized means of transport on the basis of the validity of the insurance coverage and comprising:
- An electronic assembly (2, 4, 5);
- An external device (10) on which to electronically memorize one or more indicative data of the validity of the insurance coverage of the user, said external device being connectable in communication with the electronic assembly (2, 4, 5) for the transfer of the insurance data contained in it;
- And wherein the electronic assembly (2, 4, 5) comprises a processor (2) to electronically read and process the data contained in the external device (10), and a time device (5) placed in communication with the processor (2) and capable of reading a current date and/or a geographical position in such a way as to command the block of the start-up of the means of transport in case of verification of an expired insurance coverage;
- **Characterized in that** the processor (2) is further programmed to make, following the consent for the start-up of the engine, a comparison in continuous cycle between the insurance data extrapolated and the current date and/or geographical position coming from the time device (5) and updated in continuous cycle, the processor (2) sending a block signal of the engine in case of invalidity of the insurance coverage;
- The device (1) further comprising a Transceiver CAN (6) placed in communication with the processor (2) and configured to operate said block of the engine at work in correspondence of the reception of said block signal.

2. A device (1), as per claim 1, wherein the electronic assembly (2, 4, 5) comprises an insertion seat (3, 3') into which to insert the external device (10) to put in communication the electronic assembly (2, 4, 5) with said external device (10).

3. A device (1), as per claim 1, wherein the electronic device (2, 4, 5) and the external device (10) foresee a communication of the wireless type between them.

4. A device (1), as per one or more of the preceding claims from 1 to 3, wherein the external device (10) of electronic memorization of one or more insurance data contains at least the expiry date of the insurance coverage so that, when the external device (10) is placed in communication with the processor (2), the processor detects the expiry date and compares it with the current data detected by the time device (5) to evaluate the validity of the insurance coverage.

5. A device (1), as per one or more of the preceding claims, wherein the time device is a GPS device (5).

6. A device (1), as per one or more of the preceding claims, wherein the time device is an internal clock.

7. A device (1), as per one or more of the preceding claims, wherein the electronic assembly (2, 4, 5) further comprises an EPROM card (4) in communication with the processor (2) to memorize every time the data of the external device (10) read by the processor (2).

8. A device (1), as per one or more of the preceding claims, wherein the external device (10) of electronic memorization of one or more insurance data is at choice one of these:
- A smart card (10);
- A USB key.

9. A device (1), as per one or more of the preceding claims, wherein a battery of primary feeding (7) and a reserve secondary battery (8) are foreseen.

10. A device (1), as per one or more of the preceding claims, wherein a LED lighting and/or an acoustic signal system are foreseen to indicate the current state of the insurance coverage.

11. A method for operating the command of the start-up of a motorized means of transport on the basis of the validity of the insurance coverage and comprising the operations of:
- Put in communication of an external device (10) on which one or more indicative data of the validity of the insurance coverage of the user result memorized electronically with an electronic assembly (2, 4, 5) and transfer of the insurance data from the external device (10) to the electronic assembly, the electronic assembly (2, 4, 5) comprising a processor (2) to read electronically and process the data contained in the external device (10) and a time device (5) placed in communication with the processor (2) and capable of reading a current date and/or a current geographical position;
- Comparison between the insurance data and the data coming from the time device (5) so as to inhibit the start-up of the means of transport in case of verification of an expired insurance coverage;
- **Characterized in that** the processor (2) makes, following the consent for the start-up of the engine, a further comparison in continuous cycle between the insurance data extrapolated and the current date and/or current geographical position coming from the time device (5) and updated in continuous cycle;
- Sending of a block signal of the engine in case of invalidity of the insurance coverage, said block being operated through a Transceiver CAN (6) placed in communication with the processor (2) and configured to operate said block of the engine at work in correspondence of the reception of said block signal.

## Patentansprüche

1. Vorrichtung (1) zum Unterbinden des Anlassens eines motorbetriebenen Transportmittels auf der Grundlage der Gültigkeit des Versicherungsschutzes, umfassend:
- eine elektronische Baugruppe (2, 4, 5);
- eine externe Vorrichtung (10), auf der einer oder mehrere Werte der Gültigkeit des Versicherungsschutzes des Nutzers elektronisch zu speichern sind, wobei die externe Vorrichtung in Kommunikation mit der elektronischen Baugruppe (2, 4, 5) verbunden werden kann, um die darin enthaltenen Versicherungsdaten zu übertragen;
- wobei die elektronische Baugruppe (2, 4, 5) einen Prozessor (2) umfasst, um die in der externen Vorrichtung (10) enthaltenen Daten elektronisch abzufragen und zu verarbeiten, sowie eine Zeitvorrichtung (5), die in Kommunikation mit dem Prozessor (2) positioniert und in der Lage ist, ein aktuelles Datum und/oder eine geografische Position abzufragen, sodass das Anlassen des Transportmittels bei Verifizierung eines abgelaufenen Versicherungsschutzes unterbunden wird;
- **dadurch gekennzeichnet, dass** der Prozessor (2) zudem programmiert ist, um infolge der Zustimmung zum Anlassen des Motors einen Vergleich in einem kontinuierlichen Zyklus zwischen den extrahierten Versicherungsdaten und dem aktuellen Datum und/oder der geografischen Position, eingehend von der Zeitvorrichtung (5) und im kontinuierlichen Zyklus aktualisiert, durchzuführen, wobei der Prozessor (2) ein Hemmsignal des Motors übermittelt, wenn der Versicherungsschutz ungültig ist;
- wobei die Vorrichtung (1) zudem einen CAN-Transceiver (6) umfasst, der in Kommunikation mit dem Prozessor (2) positioniert und ausgelegt ist, um die Hemmung des arbeitenden Motors bei Empfang des Hemmsignals zu bewirken.

2. Vorrichtung (1) nach Anspruch 1, wobei die elektronische Baugruppe (2, 4, 5) einen Einsatzsitz (3, 3') umfasst, in den die externe Vorrichtung (10) einzufügen ist, um Kommunikation zwischen der elektronischen Baugruppe (2, 4, 5) und der externen Vorrichtung (10) herzustellen.

3. Vorrichtung (1) nach Anspruch 1, wobei die elektronische Vorrichtung (2, 4, 5) und die externe Vorrichtung (10) eine Kommunikation vom drahtlosen Typ zwischen ihnen vorsehen.

4. Vorrichtung (1) nach einem der vorhergehenden Ansprüche 1 bis 3, wobei die externe Vorrichtung (10) zur elektronischen Speicherung von einem oder mehreren Versicherungswerten mindestens das Versicherungsdatum des Versicherungsschutzes enthält, sodass der Prozessor, wenn die Kommunikation zwischen der externen Vorrichtung (10) und dem Prozessor (2) hergestellt wird, das Ablaufdatum erfasst und diesem mit dem aktuellen, von der Zeitvorrichtung (5) erfassten Datum vergleicht, um die Gültigkeit des Versicherungsschutzes zu bewerten.

5. Vorrichtung (1) nach einem oder mehreren der vorhergehenden Ansprüche, wobei es sich bei der Zeitvorrichtung um eine GPS-Vorrichtung (5) handelt.

6. Vorrichtung (1) nach einem oder mehreren der vorhergehenden Ansprüche, wobei es sich bei der Zeitvorrichtung um eine interne Uhr handelt.

7. Vorrichtung (1) nach einem oder mehreren der vorhergehenden Ansprüche, wobei die elektronische Baugruppe (2, 4, 5) zudem eine EPROM-Karte (4) in Kommunikation mit dem Prozessor (2) umfasst, um die vom Prozessor (2) abgerufenen Daten der externen Vorrichtung (10) jederzeit zu speichern.

8. Vorrichtung (1) nach einem oder mehreren der vorhergehenden Ansprüche, wobei die externe Vorrichtung (10) zur elektronischen Speicherung von einem oder mehreren Versicherungswerten ausgewählt werden kann zwischen:
- einer Smartcard (10);
- einem USB-Stick.

9. Vorrichtung (1) nach einem oder mehreren der vorhergehenden Ansprüche, wobei eine Batterie für die Hauptspeisung (7) und eine Reservehilfsbatterie (8) vorgesehen sind.

10. Vorrichtung (1) nach einem oder mehreren der vorhergehenden Ansprüche, wobei eine LED-Beleuchtung und/oder ein akustisches Signalsystem vorgesehen sind, um den aktuellen Status des Versicherungsschutzes anzuzeigen.

11. Verfahren zum Unterbinden des Anlassens eines motorbetriebenen Transportmittels auf der Grundlage der Gültigkeit des Versicherungsschutzes, umfassend die folgenden Schritte:
- Herstellen der Kommunikation zwischen einer externen Vorrichtung (10), auf der einer oder mehrere Richtwerte für die Gültigkeit des Versicherungsschutzes des Nutzers elektronisch gespeichert sind, und einer elektronischen Baugruppe (2, 4, 5) und Übertragen der Versicherungsdaten von der externen Vorrichtung (10) auf die elektronische Baugruppe, wobei die elektronische Baugruppe (2, 4, 5) einen Prozessor (2) umfasst, um die in der externen Vorrichtung (10) enthaltenen Daten elektronisch abzufragen und zu verarbeiten, sowie eine Zeitvorrichtung (5), die in Kommunikation mit dem Prozessor (2) positioniert und in der Lage ist, ein aktuelles Datum und/oder eine geografische Position abzufragen;
- Vergleichen der Versicherungsdaten mit den von der Zeitvorrichtung (5) eingehenden Daten, um das Anlassen des Transportmittes bei Verifizierung einer abgelaufenen Versicherungsdeckung zu hemmen;
- **dadurch gekennzeichnet, dass** der Prozessor (2) infolge der Zustimmung zum Anlassen des Motors einen weiteren Vergleich in einem kontinuierlichen Zyklus zwischen den extrahierten Versicherungsdaten und dem aktuellen Datum und/oder der geografischen Position, eingehend von der Zeitvorrichtung (5) und im kontinuierlichen Zyklus aktualisiert, durchführt;
- Senden eines Hemmsignals des Motors bei Ungültigkeit der Versicherungsdeckung, wobei diese Hemmung über einen CAN-Transceiver (6) bewirkt wird, der in Kommunikation mit dem Prozessor (2) positioniert und ausgelegt ist, um die Hemmung des arbeitenden Motors bei Empfang des Hemmsignals zu bewirken.

## Revendications

1. Dispositif (1) destiné à commander le démarrage d'un moyen de transport motorisé sur la base de la validité de la couverture d'assurance et comprenant :
- un ensemble électronique (2, 4, 5)
- un dispositif externe (10) sur lequel une ou plusieurs données indicatives de la validité de la couverture d'assurance de l'utilisateur peuvent être mémorisées électroniquement, ledit dispositif externe pouvant être connecté de façon à être relié à l'ensemble électronique (2, 4, 5) transférer les données d'assurance figurant dans celui-ci ;
- et dans lequel l'ensemble électronique (2, 4, 5) comprend un processeur (2) pour lire et traiter électroniquement les données contenues dans un dispositif externe (10), et un dispositif de temps (5) relié au processeur (2) et capable de lire une date et/ou une position géographique actuelles de façon à commander le blocage de démarrage du moyen de transport s'il s'avère que la couverture d'assurance est expirée ;
- **caractérisé en ce que** le processeur (2) est en outre programmé, une fois le moteur en marche, pour comparer en cycle continu les données d'assurance calculées et la date du jour et/ou la position géographique actuelles déterminées par le dispositif de temps (5) et mises à jour en continu, le processeur (2) envoie un signal de blocage du moteur si l'assurance n'est pas valide
- Dispositif (1), comprenant en outre un émetteur-récepteur CAN (6) qui communique avec le processeur (2) et configuré pour bloquer le moteur en cours de fonctionnement à la réception dudit signal de blocage.

2. Dispositif (1), selon la revendication 1, dans lequel l'ensemble électronique (2, 4, 5) comprend un logement d'insertion (3, 3') dans lequel s'insère le dispositif externe (10) pour relier l'ensemble électronique (2, 4, 5) audit dispositif externe (10).

3. Dispositif (1), selon la revendication 1, dans lequel le dispositif électronique (2, 4, 5) et le dispositif externe (10) prévoient une communication de type sans fil entre eux.

4. Dispositif (1) selon une ou plusieurs des revendications précédentes de 1 à 3, dans lequel le dispositif externe (10) de mémorisation électronique d'une ou de plusieurs données d'assurance contient au moins la date d'expiration de la couverture d'assurance afin que lorsque le dispositif externe (10) est relié au processeur (2), le processeur détecte la date d'expiration et la compare avec les données actuelles détectées par le dispositif de temps (5) afin d'évaluer la validité de la couverture d'assurance.

5. Dispositif (1), selon une ou plusieurs des revendications précédentes, dans lequel le dispositif de temps est un dispositif GPS (5).

6. Dispositif (1), selon une ou plusieurs des revendications précédentes, dans lequel le dispositif de temps est une horloge interne.

7. Dispositif (1) selon une ou plusieurs des revendications précédentes, dans lequel l'ensemble électronique (2, 4, 5) comprend en outre une carte EPROM (4) en communication avec le processeur (2) pour mémoriser chaque fois que les données du dispositif externe (10) sont lues par le processeur (2).

8. Dispositif (1) selon une ou plusieurs des revendications précédentes, dans lequel le dispositif externe (10) de mémorisation électronique d'une ou de plusieurs données d'assurance donne le choix entre :
- une carte intelligente (10) ;
- une clé USB.

9. Dispositif (1), selon une ou plusieurs des revendications précédentes, dans lequel une batterie d'alimentation principale (7) et une batterie secondaire de réserve (8) sont prévues.

10. Dispositif (1), selon une ou plusieurs des revendications précédentes, dans lequel un éclairage LED et/ou un système de signal acoustique sont prévus pour indiquer l'état actuel de la couverture d'assurance.

11. Procédé pour actionner la commande du démarrage d'un moyen de transport motorisé en fonction de la validité de la couverture d'assurance et comprenant les opérations de :
- Mise en communication d'un dispositif externe (10) sur lequel une ou plusieurs données indicatives de la validité de la couverture d'assurance de l'utilisateur se trouvent mémorisées électroniquement avec un ensemble électronique (2, 4, 5) et transfert des données d'assurance depuis le dispositif externe (10) vers l'ensemble électronique, l'ensemble électronique (2, 4, 5), comprenant un processeur (2) pour lire et traiter électroniquement les données contenues dans le dispositif externe (10) et un dispositif de temps (5) relié au processeur (2) et capable de lire une date et/ou une position géographique actuelles ;
- Comparaison entre les données d'assurance et les données provenant du dispositif de temps (5) de façon à empêcher le démarrage du moyen de transport s'il s'avère que la couverture d'assurance est expirée ;
- **caractérisé en ce que** le processeur (2) est en outre programmé, une fois le moteur en marche, pour comparer en continu les données d'assurance extrapolées et la date et/ou la position géographique actuelles déterminée par le dispositif de temps (5) et mises à jour en continu ;
- Envoi d'un signal de blocage du moteur en cas d'invalidité de la couverture d'assurance, ledit blocage étant activé par un émetteur-récepteur CAN (6) relié au processeur (2) et configuré pour faire bloquer le moteur en cours de fonctionnement à la réception dudit signal de blocage.
